# EUROPÄISCHE PATENTSCHRIFT

(11) **EP 1 681 331 B1**
(45) Veröffentlichungstag und Bekanntmachung des Hinweises auf die Patenterteilung: **02.03.2011**
(21) Anmeldenummer: 06000959.4
(22) Anmeldetag: 17.01.2006
(51) Int. Cl.: C09K 3/32, C02F 1/68, B01J 20/02, B01D 17/02

(54) **Ölbindemittel**
Oil absorbing composition
Composition absorbant de l'huile

(30) Priorität: 18.01.2005 AT 742005
(43) Veröffentlichungstag der Anmeldung: 19.07.2006
(73) Patentinhaber: Abwasserreinigung Region Dornbirn-Schwarzach Ges.m.b.H., 6850 Dornbirn (AT)
(72) Erfinder: Dünser,Harald, Ing., 6850 Dornbirn (AT)
(74) Vertreter: Hofmann, Ralf U.

(56) Entgegenhaltungen:
- DE-A1- 2 850 624
- DE-A1- 3 908 172
- AMAIKE K ET AL: "Oil adsorbing granules - prepd. by granulating and drying mixt. of fine inorganic powder contg. clay and organic binder lipophilic water repellent" WPI/THOMSON, 1986, XP002434233

## Beschreibung

Die Erfindung betrifft ein Ölbindemittel. Ölbindemittel der verschiedensten Zusammensetzungen sind bereits im Einsatz, wobei diese in der Reget sowohl in der Herstellung als auch im Einsatz und im Hinblick auf die anschließend Entsorgung kostenintensiv sind.

Ein bekanntes Ölbindemittel (WO2004/056500A1) bezieht sich auf Wirkmechanismen von Mikroorganismen aus Primärschlamm der Abwasserreinigung. In dieser Ausführung ist eine konträre Wirkungsweise mit biologischem, fortlaufendem Abbau von KW-Verbindungen beschrieben. Eine Zumischung von Kalk (lime) erfolgt vor der Trocknung, so dass dadurch der Kalk als gelöschter Kalk im Bindemittel vorliegt. Bei der Vermischung schon vor der Trocknung des Klärschlammes und somit der dadurch beim Mischen stattfindenden Löschung des Kalkes kann es nicht zu einer guten, feinfaserigen stabilen Kornstruktur und einer feinfaserigen, inneren Gerüstsubstanz kommen.

Ein anderes bekanntes Mittel zum Aufsaugen von Öl (DE2803814A) bezieht sich auf den biologischen Abbau von mineralischen Ölen auf Basis von getrocknetem Primärschlamm. Außerdem ist die Beimischung von Bakteriennährstoffen und von Sauerstoff abgebenden Salzen vorgesehen.

Weiters ist ein Verfahren zur Herstellung von Sorptionsmitteln mit eindeutigem Bezug auf Schlämme und deren Inhaltsstoffe aus der Papierindustrie bekannt geworden (DE 19848107A).

Die DE 3908172 A1 offenbart ein Verfahren zur Herstellung eines Leichtzuschlagstoffgranulates, bei dem Ton, Klärschlamm, Flugasche und Kalk im feuchten Zustand miteinander pelletiert werden. Erst anschließend erfolgt die Trocknung. Nach dem Trocknen erfolgt erst der Brennvorgang. Dass sich das so hergestellte Leichtzuschlagstoffgranulat auch als Ölbindemittel eignet, geht aus der Schrift nicht hervor.

Die DE 2850624 A1 schlägt vor, entwässerten kommunalen Klärschlamm zusammen mit einem Kohlenstoffträger zu einem Gemenge zu vermischen und dieses Gemenge anschließend unter bestimmten Bedingungen zu Kompost zu verrotten. Als Kohlenstoffträger sind in der genannten Schrift Sägemehl und Holzmehl genannt.

Die vorliegende Erfindung hat sich daher zur Aufgabe gestellt, ein Ölbindemittel zu schaffen, welches im Wesentlichen aus Recyclingprodukten unter Ausnutzung der Kreislaufwirtschaft und unter Ressourcenschonung mit Grundlage für ökologisches Denken und Handeln hergestellt, eingesetzt und auch nach einem Einsatz entsorgt werden kann.

Dies gelingt erfindungsgemäß dadurch, dass das Ölbindemittel aus einem als Trägermaterial und Adhäsionskörper wirkenden, getrockneten Klärschlamm in Form eines Granulates und einer feinpulverigen Zumischkomponente gebildet ist.

Sekundärrohstoffe mit Wiederverwendung bedeuten Mehrfachnutzen und Kostenminderung, bedeuten aber auch neue Ertragsmöglichkeiten. In Kombination, in Mischung und Ergänzung entstehen neue Produkte mit neuen Produkt- und Funktionseigenschaften.

Getrockneter Klärschlamm als Granulat dient als Trägermaterial, Adhäsionskörper und feinkapillares Bindemittel. Es kann hier also ein bei Kläranlagen als Abfallstoff anfallendes Produkt - welches bisher lediglich als Düngemittel eingesetzt werden konnte - in optimaler Weise für die Herstellung eines Ölbindemittels herangezogen werden.

Neue Anwendungsbereiche werden möglich. Aus zwei Komponenten mit ursprünglich gänzlich anders gearteten Anwendungsbereichen, lässt sich in geeigneter Mischung und Aufbereitung ein vor allem wirksames, jedoch auch preiswertes Ölbindemittel herstellen, wobei es besonders wesentlich ist, dass die Zumischkomponente erst dem fertig getrockneten Granulat zugeführt wird, also das Trocknungsverfahren nicht mitmacht.

Ferner wird vorgeschlagen, dass das Granulat in einem Wirbelschicht-Fließbetttrocknungs-Verfahren hergestellt ist. Das Trocknungssystem "Wirbelschicht-Trocknung in Fließbett-Technik" bringt die Möglichkeit mit sich, das für die vorliegende Erfindung eben besonders geeignete Granulat herzustellen. Damit wird es möglich, ein hygienisches und biologisch inaktives Trägermaterial zu schaffen, da eine Behandlung in einem Temperaturbereich von über 80°C gegeben ist. Biologische Aktivität und somit biologische Abbauvorgänge sind nicht das Ziel der Erfindung. Das Ölbindevermögen basiert auf rein physikalischen Mechanismen.

Die Trocknung bei mindestens 80°C und einer Verweildauer von einer Stunde im Wirbelschichtverfahren bewirkt eine durchgehende Trocknung ohne Restfeuchte im Kern. Bei nur 50°C wäre dies nicht gewährleistet. Das hier angewendete Trocknungsverfahren gewährleistet eine stabile Kornstruktur durch die feinfaserige innere Gerüstsubstanz.

Anstelle der Wirbelschicht-Fließbetttrocknung können auch andere geeignete Trocknungsverfahren eingesetzt werden, mit welchen Klärschlamm getrocknet und als Granulat hergestellt werden kann, wobei jedoch die Trocknungstemperatur und eine bestimmte Verweildauer von großer Bedeutung sind.

Bei dem erfindungsgemäßen Ölbindemittel ist ferner vorgesehen, dass das Granulat von vorzugsweise sphärischen Partikeln ausgeformt ist mit strukturierter großer Oberfläche und einem gerüstartig porösen Inneren zur Bildung einer Art Spongiosa. In diesem Zusammenhang ist ferner vorteilhaft, dass die feinpulverige Zumischkomponente aus organischen Salzen, insbesondere Calciumoxid, Calciumphosphat und Calciumcarbonat besteht. Die räumliche Ausformung des Granulates als vorzugsweise sphärische Partikel mit strukturierter großer Oberfläche und gerüstartig porösem Inneren, Spongiosa aus organischem Material und anorganischen Salzen bewirkt hohes Adhäsionsvermögen und optimale Saugfähigkeit.

Eine besonders ideale Ausgestaltung sieht vor, dass die feinpulverige Zumischkomponente aus gelöschtem Kalk [Ca(OH)2] besteht, wobei es außerdem vorteilhaft ist, wenn die Zumischkomponente adhäsiv an das Granulat gebunden ist. Die spezifische, durch Trocknung bedingte Granulatoberfläche eignet sich in besonderem Maße zur Anhaftung der feinpulverigen zugemischten aus gelöschtem Kalk (Portlandit [Ca (OH)2]).

Das Trockengranulat (getrockneter Klärschlamm) unterliegt nach dem Erkenntnis des Verwaltungsgerichtshofes, Zl. 2001/07/0028-5, nicht mehr dem Abfallregime. Das Wirbelschicht-Trocknungsverfahren führt zum Produktstatus.

Die feinpulverige Zumischkomponente aus gelöschtem Kalk (Portlandit [Ca(OH)2]) wird oberflächlich adhäsiv an das Granulatkorn gebunden. Die Granulatpartikel mit einem Durchmesser von annähernd 0,5 - 3,0 mm Durchmesser werden mit einer feinpulverigen Zumischkomponente in Form von gelöschtem Kalk [Ca(OH)2] mit einer Partikelgröße von annähernd 5 - 10 µm, belegt.

Die Oberflächenbelegung verhindert eine spontane Wasseraufnahme. Der Viskositätsunterschied zwischen Wasser einerseits und diversen Ölen/Diesel usw. bewirkt die überwiegende und rasche Bindung dieser Stoffe an die Granulatpartikel. Altöle und ähnliche Stoffe werden bevorzugt gebunden.

Diese Wirkung ist für die Verwendung als Ölbindemittel von entscheidender Bedeutung. Öle (Motor-, Getriebe-, Hydrauliköle usw.) werden gebunden, die Wasseraufnahme verhindert.

Somit eignet sich dieses Bindemittel, neben der Anwendung auf befestigten Flächen (Straßen, Werkstätten, Lagerflächen etc.) auch direkt zur Bindung von div. Ölen auf Wasseroberflächen.

Gebundenes Öl sedimentiert mit dem Granulat-Bindemittel, ist abscheidbar und kann somit der Entsorgung als Brennstoff zugeführt werden. Der zugemischte gelöschte Kalk (Portlandit) erhöht den pH-Wert des Fertigproduktes und bewirkt damit eine Stabilisierung hinsichtlich der biologischen Aktivität der organischen Anteile im Granulatpartikel. Damit wird eine längere und bessere Lagerfähigkeit erreicht.

Das erfindungsgemäße Ölbindemittel kann als Bindemittel für Öle unterschiedlicher Art und Verwendung im Bereich Straßenverkehres, aufgrund Unfallfolgen und Katastropheneinsatz usw. eingesetzt werden. Es ist aber auch ein Einsatz im Produktionsbereich wie Werkstätten, Industrieproduktion, Tankstellen, Verkehrsbetriebe, Reparaturbetriebe usw. möglich. Auch im Haushalt und Freizeitbereich ist dieses Ölbindemittel vorteilhaft einsetzbar. Ebenfalls ist es geeignet für Einsätze bei Ölverschmutzung auf Wasserflächen. Ein weiteres Einsatzgebiet ergibt sich bei der Separierung in Ölabscheidern.

Handelsübliche gebrauchte Ölbindemittel werden im Regelfall über eine Verbrennung entsorgt. Getrockneter Klärschlamm findet zunehmend als Sekundärbrennstoff Verwendung. Trockengranulat besitzt etwa den Heizwert von Braunkohle. Mit vorgängiger Verwendung als Ölbindemittel erfolgt eine Heizwertanreicherung. Die Entsorgung über die Verbrennung entspricht dem Stand der Technik.

Unverbrauchtes erfindungsgemäßes Ölbindemittel kann zudem als organisch-mineralischer Langzeitdünger verwendet werden. Anwendung sind z.B. mit ca. 0,5 bis 1,0 l/m² für Rasenflächen gegeben. Außerdem eignet es sich auch als Kompost-Zuschlagsstoff und als Schnee- und Eis-Abtauhilfsmittel.

Trockengranulat als Trägermaterial gilt als CO2-neutral in der Verbrennung und kann daher problemlos der Verbrennung zugeführt werden.

Nachstehend wird ein spezielles Ausführungsbeispiel für das Granulat, für die Zumischkomponente und für das daraus hergestellte Ölbindemittel aufgezeigt, wobei diese speziellen Angaben nur eine mögliche Variante darstellen.

| **Technische Daten Granulat-Trägermaterial** | | | | |
|---|---|---|---|---|
| Erscheinungsbild: | | körnig, schwarz | | |
| Oberfläche: | | rau, stark strukturiert | | |
| Korngröße: | | ca. 0,5 bis 3 mm | | |
| Spez. Oberfläche: | | ca. 2,5 m²/g | | |
| PH-Wert: | | 7 bis 8 | | |
| Schüttgewicht | | 0,5 bis 0,65 kg/dm³ | | |
| Spez. Gewicht: | | ca. 1 kg/dm³ | | |
| Trockensubstanz: | | >85 % | | |
| Zündtemperatur: | | 360 °C - 550 °C | | |
| Glimmtemperatur | | 260 °C | | |
| Heizwert: | | Hu ca. 10500 kJ/kg | | |
| Zusammensetzung: | | 50/50 & org./mineralisch | | |
| Staubanteil | | < 3 % (< 0,56 mm) | | |
| Mineralische Anteile: (Richtwerte) | | SiO2 | 19,4 % | (bez. auf TS) |
| | | Fe2O3 | 18 % | |
| | | Al2O3 | 6,3 % | |
| | | CaO | 20,8 % | |
| | | MgO | 1,5 % | |
| | | NaO2 | 0,5 % | |
| | | K2O | 0,7 % | |
| | | P2O5 | 13,1 % | |
| | | SO2 | 13,7 % | |
| Lagerung: | | trocken | | |
| Herstellung: | Klärschlamm mit aerobem biologischen Abbau im Belebungsverfahren, anaerober Abbau im Biogasreaktor, Eindickung, mechanische Entwässerung und Trocknung im Wirbelbett-Fließbetttrockner | | | |

| **Technische Daten Portlandit Ca(OH)2** | |
|---|---|
| Erscheinungsbild: | pulverig, weiß, geruchlos |
| Dichte: | ca. 2,3 g/cm³ |
| Schüttgewicht: | ca. 0,38 g/cm³ |
| Löslichkeit im Wasser (20 °C): | 1650 mg/l |
| Spez. Oberfläche: | 21000 cm²/g (nach Blaine) |
| PH-Wert: | 11,5 bis 12,5 |
| Glühverlust: | < 2,5 % |
| Hauptbestandteil: | CaO (ca. 98 %) |
| Wassergefährdungsklasse: | 1 |
| Angabe zur Ökologie: | ökologisch unbedenklich |
| Chem. Reaktion: | reagiert mit Wasser zu alkalischen |
| | Lösungen |
| | wirkt basisch/säureneutralisierend |
| | nicht brennbar |

| **Technische Daten eines Ausführungsbeispieles des Ölbindemittel** | |
|---|---|
| Erscheinungsbild: | körnig, grau |
| Oberfläche: | wie Granulat |
| PH-Wert: | 10 bis 12 |
| Schüttgewicht: | 0,55 - 0,65 kg/dm³ |
| Glühverlust: | ca. 45 - 50 % |
| Korngröße: | 0,5 bis 3,0 mm 0 |
| Trockensubstanz: | > 90 % |
| Heizwert: | ca. 10500 kJ/kg |
| Lagerung: | trocken |
| Anwendung: | als Ölbindemittel im Trockenund Nassbereich |
| Ölbindevermögen: | ca. 60 g bezogen auf 100 g TS |
| (Laut Prüfbericht der Bautechnischen Versuchsanstalt der HTL Rankweil) | |

Durch das erfindungsgemäße Ölbindemittel kann nicht nur eine neue und wirkungsvolle Einsatzmöglichkeit für das "Abfallprodukt" Klärschlamm geschaffen werden, sondern es ergeben sich daraus eine Reihe von vorteilhaften Wirkungen bei allen Anwendungsvarianten im Zusammenhang mit aufzusaugendem oder aufzunehmendem Öl. Außerdem ist eine optimale Möglichkeit der Entsorgung gegeben (Verbrennung und gegebenenfalls in ungebrauchtem Zustand Kompostierung und Düngung). Durch die vorhandene sehr große Oberfläche bindet sich das Öl sehr schnell, wobei die Oberflächenspannung das ihre dazu beiträgt, um eben das Öl und nicht auch vorhandenes Wasser aufzusaugen (anzuziehen). Durch die besondere Oberflächenstruktur des Granulates ist auch gewährleistet, dass die Zumischkomponente im Mischvorgang besonders gut am Granulat anhaftet.

Die Auswahl der Komponenten (Art und Größe des Granulates und auch der Zumischkomponenten) kann ganz gezielt auf eine höchstmögliche spezifische Oberfläche ausgelegt werden. Je kleiner die Teile (Granulat), je größer wird die zur Verfügung stehende Oberfläche für die Adhäsion des aufzunehmenden Öls. Es sollen also immer Materialien als Zumischkomponenten beigefügt werden, welche der pH-Wert-Anhebung dienen und zur Stabilisierung der biologischen Aktivität und zum Erreichen der gewünschten Oberflächenspannung beitragen.

Besonders vorteilhaft wirkt sich aus, dass eine Auswahl an ökologisch unbedenklichen Produkten gegeben ist, welche kein Gefahrenrisiko darstellen und im Hinblick auf die spätere Entsorgung in der Verbrennung CO2-neutral sind. Die Mehrfachnutzung stellt zudem einen sinnvollen und erwünschten Beitrag zur Kreislaufwirtschaft dar.

## Patentansprüche

1. Ölbindemittel, **dadurch gekennzeichnet, dass** dieses aus einem als Trägermaterial und Adhäsionskörper wirkenden, getrockneten Klärschlamm in Form eines Granulates und einer feinpulverigen Zumischkomponente gebildet ist.

2. Ölbindemittel nach Anspruch 1, **dadurch gekennzeichnet, dass** das Granulat in einem Wirbelschicht-Fließbetttrocknungs-Verfahren hergestellt ist.

3. Ölbindemittel nach Anspruch 1 oder 2, **dadurch gekennzeichnet, dass** das Granulat von vorzugsweise sphärischen Partikeln ausgeformt ist mit strukturierter großer Oberfläche und einem gerüstartig porösen Inneren zur Bildung einer Art Spongiosa.

4. Ölbindemittel nach einem der Ansprüche 1 bis 3, **dadurch gekennzeichnet, dass** die feinpulverige Zumischkomponente aus gelöschtem Kalk [Ca(OH)2] besteht.

5. Ölbindemittel nach Anspruch 4, **dadurch gekennzeichnet, dass** die feinpulverige Zumischkomponente aus gelöschtem Kalk [Ca(OH)2] adhäsiv an das Granulat gebunden ist.

6. Ölbindemittel nach einem der Ansprüche 1 bis 5, **dadurch gekennzeichnet, dass** das Granulat aus Partikeln mit annähernd 0,5 bis 3,0 mm Durchmesser gebildet ist.

7. Ölbindemittel nach Anspruch 4 oder 5, **dadurch gekennzeichnet, dass** die feinpulverige Zumischkomponente in Form von gelöschtem Kalk [Ca(OH)2] mit einer Partikelgröße von annähernd 5 bis 10 µm zugeführt ist.

## Claims

1. An oil absorbing composition, **characterised in that** it is formed from a dried sewage sludge acting as support and adhesive body in the form of a granular material and a finely powdered additive component.

2. The oil absorbing composition according to claim 1, **characterised in that** the granular material is produced in a fluidised bed drying process.

3. The oil absorbing composition according to claim 1 or 2, **characterised in that** the granular material is shaped from preferably spherical particles with a large textured surface and a skeletal porous interior to form a kind of rigid sponge.

4. The oil absorbing composition according to one of claims 1 to 3, **characterised in that** the finely powdered additive component consists of slaked lime [Ca(OH)2].

5. The oil absorbing composition according to claim 4, **characterised in that** the finely powdered additive component consisting of slaked lime [Ca(OH)2] is adhesively bonded to the granular material.

6. The oil absorbing composition according to one of claims 1 to 5, **characterised in that** the granular material is formed from particles with a diameter of approximately 0.5 to 3.0 mm.

7. The oil absorbing composition according to claim 4 or 5, **characterised in that** the finely powdered additive component is introduced in the form of slaked lime [Ca(OH)2] with a particle size of approximately 5 to 10 µm.

## Revendications

1. Liant pour huile, **caractérisé en ce qu'**il est formé à partir d'une boue résiduaire séchée sous forme de granulés faisant office de matériau support et d'élément d'adhésion et d'un partenaire de mélange sous forme de poudre fine.

2. Liant pour huile selon la revendication 1, **caractérisé en ce que** les granulés sont produits par un procédé de séchage en lit fluidisé à couche turbulente.

3. Liant pour huile selon la revendication 1 ou la revendication 2, **caractérisé en ce que** les granulés sont constitués de particules de préférence sphériques ayant une grande surface structurée et un intérieur poreux servant de squelette pour former une sorte de matière spongieuse.

4. Liant pour huile selon l'une des revendications 1 à 3, **caractérisé en ce que** le partenaire de mélange sous forme de poudre fine est constitué de chaux éteinte [Ca(OH)₂].

5. Liant pour huile selon la revendication 4, **caractérisé en ce que** le partenaire de mélange sous forme de poudre fine constituée de chaux éteinte [Ca(OH)₂] est lié aux granulés de manière adhésive.

6. Liant pour huile selon l'une des revendications 1 à 5, **caractérisé en ce que** les granulés sont constitués de particules ayant un diamètre de l'ordre de 0,5 à 3,0 mm.

7. Liant pour huile selon la revendication 4 ou la revendication 5, **caractérisé en ce que** le partenaire de mélange sous forme de poudre fine constituée de chaux éteinte [Ca(OH)₂] est alimenté avec une taille de particules de l'ordre de 5 à 10 µm.
